# EUROPÄISCHE PATENTSCHRIFT

(11) **EP 3 213 970 B1**
(45) Veröffentlichungstag und Bekanntmachung des Hinweises auf die Patenterteilung: **20.06.2018**
(21) Anmeldenummer: 17157548.3
(22) Anmeldetag: 23.02.2017
(51) Int. Cl.: B60S 9/18

(54) **HANDKURBEL-DREHSICHERUNGSEINRICHTUNG FÜR STÜTZRÄDER VON FAHRZEUGANHÄNGERN UND KURBELBETÄTIGTES STÜTZRAD MIT EINER DERARTIGEN HANDKURBEL-DREHSICHERUNGSEINRICHTUNG**
HAND CRANK ROTATION PREVENTION SYSTEM FOR SUPPORTING WHEELS FOR VEHICLE TRAILERS AND SUPPORTING WHEEL WITH SUCH A HAND CRANK ROTATION PREVENTION SYSTEM.
PROTECTION EN ROTATION DE MANIVELLE POUR ROUE DE SUPPORT DE REMORQUE DE VEHICULE ET ROUE DE SUPPORT AVEC UN TEL SYSTÈME DE PROTECTION EN ROTATION.

(30) Priorität: 02.03.2016 DE 202016101115 U
(43) Veröffentlichungstag der Anmeldung: 06.09.2017
(73) Patentinhaber: Knott GmbH, D-83125 Eggstätt (DE)
(72) Erfinder: Lurtz, Hans-Georg, 83109 Grosskarolinenfeld (DE)
(74) Vertreter: Bauer, Friedrich

(56) Entgegenhaltungen:
- EP-A2- 2 845 774
- DE-A1- 19 508 089
- US-A1- 2007 257 243
- US-A1- 2008 164 683

## Beschreibung

Die Erfindung betrifft eine Handkurbel-Drehsicherungseinrichtung für Stützräder von Fahrzeuganhängern gemäß dem Oberbegriff des Anspruches 1 und ein kurbelbetätigtes Stützrad gemäß dem Oberbegriff des Anspruches 9.

Stützräder für Fahrzeuganhänger dienen in bekannter Weise dazu, die Deichsel eines abgehängten Fahrzeuganhängers in einer vorbestimmten Höhe abzustützen. Die Höhenverstellung des Stützrades erfolgt üblicherweise über eine Handkurbel, mit welcher das innerhalb des Außenrohrs angeordnete, ausfahrbare Stützenteil und damit das daran befestigte Rad über einen Spindeltrieb nach unten oder oben bewegt wird.

Bei derartigen Stützrädern besteht das Problem, dass sich die Handkurbel ungewollt drehen kann, beispielsweise durch Vibrationen im Fahrbetrieb. Dies kann zu einem ungewollten Ausfahren und Drehbewegungen des Stützrads und sogar zu gefährlichen Bodenkontakten während des Fahrbetriebs führen.

Dokument EP 2 845 774 A offenbart eine Handkurbel-Drehsicherungseinrichtung gemäß den Oberbegriff des Anspruchs 1. Der Erfindung liegt von daher die Aufgabe zugrunde, eine Handkurbel-Drehsicherungseinrichtung für Stützräder zu schaffen, mit der auf möglichst einfache Weise ein ungewolltes Drehen der Handkurbel verhindert werden kann. Weiterhin soll ein kurbelbetätigtes Stützrad mit einer möglichst einfachen und kostengünstigen Handkurbel-Drehsicherungseinrichtung geschaffen werden.
Diese Aufgabe wird erfindungsgemäß durch die Merkmale der Ansprüche 1 und 9 gelöst. Vorteilhafte Ausführungsformen der Erfindung sind in den weiteren Ansprüchen beschrieben.
Die erfindungsgemäße Handkurbel-Drehsicherungseinrichtung umfasst einen Sicherungsbügel, der ausgebildet ist, mittels einer Schwenkbewegung in und aus Sicherungseingriff mit einer Handkurbel des Stützrads gebracht zu werden, sowie eine Schellenhalterung zur schwenkbaren Lagerung des Sicherungsbügels, wobei die Schellenhalterung eine Halteschelle, die zum Umschließen eines Außenrohrs des Stützrads ausgebildet ist, und eine an der Halteschelle befestigte Schwenklagereinrichtung zur schwenkbaren Lagerung des Sicherungsbügels aufweist.
Die erfindungsgemäße Handkurbel-Drehsicherungseinrichtung kann auf sehr einfache und kostengünstige Weise hergestellt werden. Die Bedienung ist äußerst einfach, da hierfür nur eine Schwenkbewegung des Sicherungsbügels erforderlich ist. Die Handkurbel wird mittels des Sicherungsbügels sicher arretiert, so dass ein ungewolltes Drehen der Handkurbel und ein damit verbundenes Ausfahren des Stützrads zuverlässig verhindert werden kann. Von besonderem Vorteil ist, dass die Handkurbel-Drehsicherungseinrichtung aufgrund der Schellenhalterung auch an bestehende Stützräder nachgerüstet werden kann. Weiterhin ist von besonderem Vorteil, dass aufgrund der Schellenhalterung keinerlei Bohrlöcher oder andere Öffnungen im Außenrohr zur Befestigung des Sicherungsbügels eingebracht werden müssen, welche eine Materialschwächung sowie ein Risiko darstellen, dass Wasser und Schmutz in das Innere des Außenrohrs eindringen.

Gemäß einer vorteilhaften Ausführungsform besteht der Sicherungsbügel aus einem einarmigen Bügel, der einseitig an der Schellenhalterung schwenkbar gelagert ist. Ein derartiger Sicherungsbügel ist auf besonders einfache und kostengünstige Weise herstellbar. Alternativ hierzu ist es jedoch auch möglich, einen zweiarmigen Sicherungsbügel zu verwenden, dessen beide Arme auf gegenüberliegenden Seiten der Halteschelle schwenkbar gelagert sind.

Vorteilhafterweise weist der Sicherungsbügel einen ersten, lagernahen Bügelabschnitt, dessen Länge 20 bis 50% der Bügelgesamtlänge beträgt, und einen zweiten Bügelabschnitt auf, dessen Länge 50 bis 80% der Bügelgesamtlänge beträgt und der in einem Winkel von 70° bis 110° relativ zum ersten Bügelabschnitt verläuft. Ein derartiger Sicherungsbügel hat in der Seitenansicht eine L-Form und ist derart ausgebildet, dass sein Eingriffs-Endbereich, der mit der Handkurbel in Eingriff bringbar ist, in eine Freigabestellung zurückschwenkbar ist, in welcher der gesamte Sicherungsbügel und insbesondere auch der Eingriffs-Endbereich sehr nahe am Außenrohr angeordnet sind. Dies bietet optische Vorteile und vermeidet einen weit über das Außenrohr vorstehenden Eingriffs-Endbereich des Sicherungsbügels in der zurückgeschwenkten Freigabestellung.

Vorteilhafterweise weist der Sicherungsbügel einen hakenförmigen Eingriffs-Endbereich auf, der in einer Schwenkebene, die senkrecht zur Grundebene der Halteschelle angeordnet ist, relativ zur Halteschelle schwenkbar ist. Dies bedeutet mit anderen Worten, dass dann, wenn die Halteschelle an einem senkrecht angeordneten Außenrohr befestigt wird, die Schwenkachse des Sicherungsbügels waagrecht verläuft, so dass der Eingriffs-Endbereich des Sicherungsbügels in einer vertikalen Ebene verschwenkt werden kann. Diese vertikale Schwenkebene kann insbesondere in Längsrichtung des Fahrzeuganhängers liegen. Es ist jedoch auch ohne weiteres möglich, dass diese Schwenkebene quer zur Anhängerlängsrichtung oder in einem beliebigen Winkel hierzu liegt.

Vorteilhafterweise besteht der Sicherungsbügel aus einem einstückigen, gebogenen Drahtbügel. Ein derartiger Drahtbügel ist auf besonders einfache und kostengünstige Weise herstellbar.

Vorteilhafterweise umfasst die Schwenklagereinrichtung der Schellenhalterung ein an der Halteschelle befestigtes und von der Halteschelle seitlich nach außen vorstehendes hülsen- oder bolzenförmiges Lagerelement, an dem ein Lagerabschnitt des Sicherungsbügels drehbar gelagert ist. Dieses Lagerelement kann an der Halteschelle festgeschweißt oder auf andere Weise befestigt sein.

Vorteilhafterweise besteht das Lagerelement aus einer Lagerhülse mit Innengewinde, in die eine Schraube mit einem als Seitenbegrenzungselement dienenden Schraubenkopf eingeschraubt ist, dessen Durchmesser größer als der Außendurchmesser der Lagerhülse ist. Hierdurch kann auf einfache Weise eine lösbare Seitenführung für den Sicherungsbügel geschaffen werden, die ein Lösen des Sicherungsbügels von der Lagerhülse in deren Axialrichtung nach Außen verhindert.

Vorteilhafterweise umfasst die Halteschelle ein Metallband, das auf seiner Innenseite mit einem Mantel aus Gummi oder Kunststoff verkleidet ist. Im Falle eines Kunststoffs hat dieser zweckmäßigerweise elastische und rutschhemmende Eigenschaften. Die Halteschelle kann hierdurch rutschsicher am Außenrohr befestigt werden.

Gemäß einer vorteilhaften Ausführungsform ist der Eingriffs-Endbereich des Sicherungsbügels derart U-förmig ausgebildet, dass er beim Überführen in die Drehsicherungsstellung von oben her auf die Handkurbel aufsetzbar ist. Dies bietet den Vorteil, dass der Sicherungsbügel aufgrund seiner Schwerkraft in Auflage auf der Handkurbel gehalten wird, nachdem der Sicherungsbügel in die Drehsicherungsstellung gebracht worden ist. Alternativ oder zusätzlich ist es jedoch auch möglich, den Eingriffs-Endbereich des Sicherungsbügels derart zu formen, dass er in der Drehsicherungsstellung die Handkurbel hinter- bzw. untergreift, so dass er auf besonders sichere Weise an der Handkurbel arretiert wird. Insbesondere ist es möglich, den Eingriffs-Endbereich mit einer Klipp- oder Schnappfunktion auszustatten, die mit der Handkurbel zusammenwirkt.

Vorteilhafterweise ist die Handkurbel-Drehsicherungseinrichtung derart am Außenrohr des Stützrads befestigt und ausgebildet, dass der Eingriffs-Endbereich des Sicherungsbügels über das obere Ende des Außenrohrs schwenkbar ist.

Die Erfindung wird nachfolgend an Hand der Zeichnungen beispielhaft näher erläutert. Es zeigen:
- Figur 1:: eine Darstellung eines Stützrads für Fahrzeuganhänger mit erfindungsgemäßer HandkurbelDrehsicherungseinrichtung,
- Figur 2:: die Einzelheit II von Figur 1 in vergrößerter Darstellung,
- Figur 3:: eine Seitenansicht eines oberen Abschnitts des Stützrads mit daran befestigter HandkurbelDrehsicherungseinrichtung, wobei der Sicherungsbügel in der Drehsicherungsstellung dargestellt und in zwei weiteren Stellungen angedeutet ist,
- Figur 4:: eine Darstellung der Teile von Figur 3 von Vorne,
- Figur 5:: eine Seitenansicht der Handkurbel-Drehsicherungseinrichtung in Alleinstellung,
- Figur 6:: einen Schnitt längs der Linie VI-VI von Figur 5,
- Figur 7:: eine Draufsicht auf die Handkurbel-Drehsicherungseinrichtung, und
- Figur 8:: eine räumliche Darstellung der Handkurbel-Dreh-Sicherungseinrichtung.

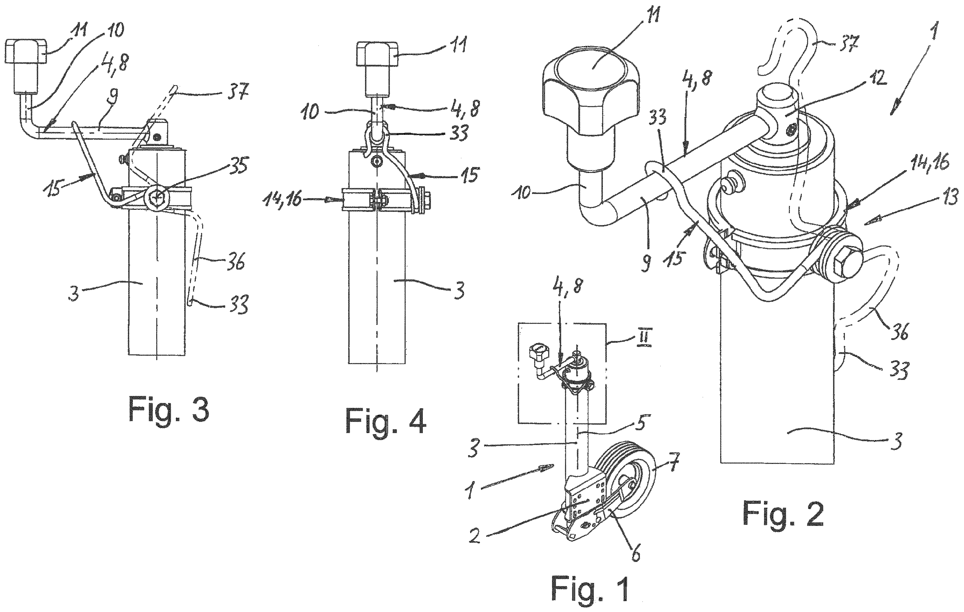

Figur 1 zeigt ein kurbelbetätigtes Stützrad 1 für einen nicht dargestellten Fahrzeuganhänger. Das Stützrad 1 wird üblicherweise an der Deichsel des Fahrzeuganhängers befestigt, wobei die Befestigung über eine Haltekonsole 2 erfolgt.

Das Stützrad 1 weist ein vertikales Außenrohr 3 und ein innerhalb des Außenrohrs 3 angeordnetes, nicht dargestelltes Stützenteil auf, das im Außenrohr 3 längsverschiebbar gelagert ist. Das innere Stützenteil ist mit einer Handkurbel 4 derart gekoppelt, dass durch Drehen der Handkurbel 4 um die Längsachse 5 des Außenrohrs 3 das innere Stützenteil entweder nach unten aus dem Außenrohr 3 ausgefahren oder in das Außenrohr 3 zurückgezogen werden kann. Üblicherweise erfolgt diese Ausfahr- bzw. Einzugsbewegung mittels eines Spindeltriebs.

Am unteren Ende des inneren Stützenteils ist eine Halteeinrichtung 6 in Form eines Schwenkhebels befestigt, an dessen Ende ein Rad 7 gehaltert ist. Wird das innere Stützenteil aus dem Außenrohr 3 ausgefahren, schwenkt die Halteeinrichtung 6 automatisch in eine im Wesentlichen vertikale Position nach unten und wird in dieser unteren Position verriegelt, wodurch die Kurbelwege zum Abstützen der Deichsel verringert werden. Beim Hochkurbeln des Stützrads 1 wird die Halteeinrichtung 6 mit dem Rad 7 dagegen automatisch in die in Figur 1 dargestellte Position hochgeschwenkt.

Wie aus den Figuren 1 bis 4 ersichtlich, umfasst die Handkurbel 4 einen Kurbelarm 8 mit einem ersten, horizontal ausgerichteten Kurbelarmabschnitt 9, der an seinem äußeren Ende in einen zweiten, vertikal verlaufenden Kurbelarmabschnitt 10 übergeht. Am freien Ende des zweiten Kurbelarmabschnitts 10 ist in üblicher Weise ein Drehknopf 11 drehbar gelagert, den der Benutzer ergreift, um die Handkurbel 4 um die Längsachse 5 zu drehen. Das innere Ende des ersten Kurbelarmabschnitts 9 ist in üblicher Weise mit dem oberen Ende einer vertikalen Welle 12 des Spindeltriebs verbunden.

Um zu verhindern, dass sich die Handkurbel 4 unabsichtlich, beispielsweise durch Vibrationen, um die Längsachse 5 dreht, ist am Stützrad 1 eine Handkurbel-Drehsicherungseinrichtung 13 befestigt. Diese Handkurbel-Drehsicherungseinrichtung 13 weist eine Schellenhalterung 14 sowie einen daran schwenkbar befestigten Sicherungsbügel 15 auf, der in und außer Halteeingriff mit der Handkurbel 4 bringbar ist.

Die Schellenhalterung 14 dient zur Klemmbefestigung der Handkurbel-Drehsicherungseinrichtung 13 am Außenrohr 3. Hierzu weist die Schellenhalterung 14 eine Halteschelle 16 auf, die im gezeigten Ausführungsbeispiel als einstückige Halteschelle ausgebildet ist. Die Halteschelle 16 ist längs ihres Umfangs somit nur an einer Stelle unterbrochen und kann dort mittels einer Spannschraube 17 zusammengespannt werden. Alternativ hierzu ist es jedoch auch möglich, zweistückige Halteschellen zu verwenden, wobei sich jede Hälfte zweckmäßigerweise über etwas weniger als 180° erstreckt und die beiden Hälften durch eine Mehrzahl von Spannschrauben oder ähnlicher Spannmittel zusammengespannt werden können.

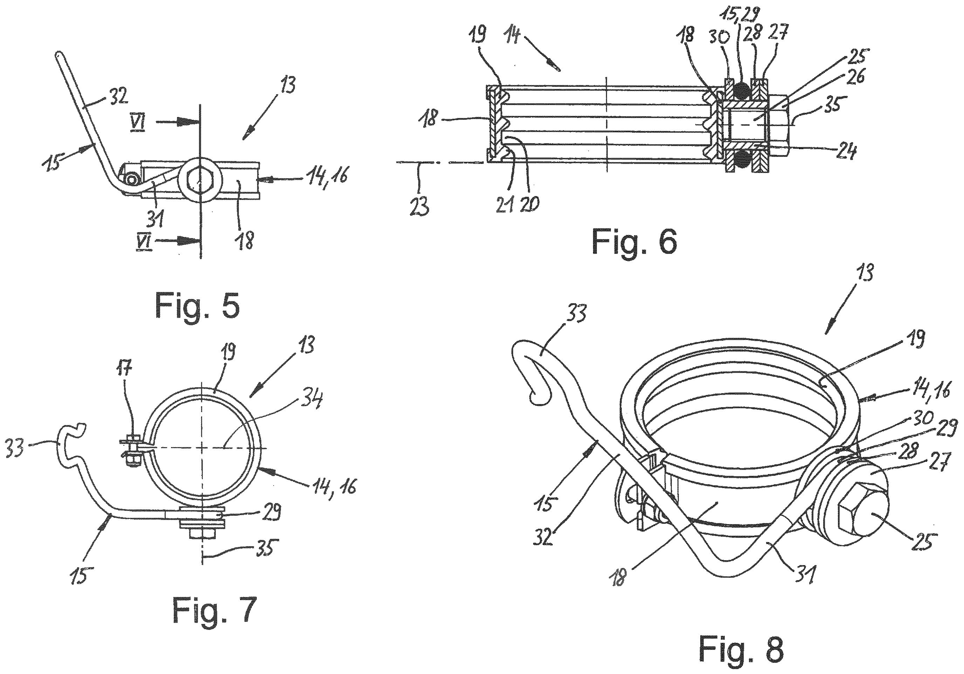

Wie insbesondere aus den Figuren 6 und 8 ersichtlich, umfasst die Halteschelle 16 ein Metallband 18, dessen innere Umfangswand mit einem Mantel 19 aus Gummi oder Kunststoff ausgekleidet ist. Der Mantel 19 kann sich, wie dargestellt, über die obere und untere Stirnseite des Metallbands 18 bis zu dessen Außenumfangsfläche erstrecken. Zweckmäßigerweise besteht der Mantel 19 aus einem elastischen, rutschhemmenden Material. Eine besonders gute Anpassung an die Oberfläche des Außenrohrs 3 kann erreicht werden, wenn der Mantel 19, wie in Figur 6 dargestellt, Rillen 20 und Stege 21 aufweist, die in Umfangsrichtung verlaufen.

Am Metallband 18 der Halteschelle 16 ist ein hülsen- oder bolzenförmiges Lagerelement 22 befestigt, das von der Halteschelle 16 seitlich nach außen vorsteht. Die Längsmittelachse dieses Lagerelements 22 ist hierbei parallel zu einer Grundebene 23 der Halteschelle 16 angeordnet.

Wie aus Figur 6 ersichtlich, besteht im dargestellten Ausführungsbeispiel das Lagerelement 22 aus einer Lagerhülse 24. Die Lagerhülse 24 weist ein Innengewinde auf, so dass eine Schraube 25 von außen her in die Lagerhülse 24 eingeschraubt werden kann. Die Schraube 25 hat einen Schraubenkopf 26, dessen Durchmesser größer ist als der Außendurchmesser der Lagerhülse 24. Der Schraubenkopf 26 dient damit als lösbares, äußeres Seitenbegrenzungselement und Axialanschlag für zwei Zwischenscheiben 27, 28, die drehbar auf der Lagerhülse 24 angeordnet sind.

Die Lagerhülse 24 dient als Schwenklager für den Sicherungsbügel 15. Hierzu weist der Sicherungsbügel 15, der im vorliegenden Ausführungsbeispiel als einstückiger Drahtbügel ausgebildet ist, einen kreisförmig gebogenen Endbereich auf, der einen Lagerabschnitt 29 bildet. Der Innendurchmesser dieses Lagerabschnitts 29 ist nur geringfügig größer als der Außendurchmesser der Lagerhülse 24, so dass der Lagerabschnitt 29 mit geringem Spiel auf die Lagerhülse 24 aufgesetzt und sich auf dieser drehen kann. Die Zwischenscheibe 28 bildet hierbei einen äußeren Axialanschlag für den Lagerabschnitt 29 des Sicherungsbügels 15. Der innere Axialanschlag wird durch eine weitere Zwischenscheibe 30 gebildet, die zwischen dem Sicherungsbügel 15 und der Halteschelle 16 angeordnet ist.

Der Sicherungsbügel 15 besteht im gezeigten Ausführungsbeispiel aus einem einarmigen Bügel, der, wie vorstehend beschrieben, mittels des Lagerabschnitts 29 einseitig an der Schellenhalterung 14 schwenkbar gelagert ist. In der Seitenansicht, die in Figur 5 dargestellt ist, hat der Sicherungsbügel 15 eine L-Form. Der Sicherungsbügel 15 weist einen ersten, lagernahen Bügelabschnitt 31 und einen um etwa 90° nach oben abgebogenen, daran angrenzenden zweiten Bügelabschnitt 32 auf. Die Länge des ersten Bügelabschnitts (ohne Lagerabschnitt 29) beträgt etwa 1/3 der Bügelgesamtlänge, während die Länge des zweiten Bügelabschnitts 32 etwa 2/3 der Bügelgesamtlänge beträgt.

Wie insbesondere aus den Figuren 7 und 8 ersichtlich, weist der Sicherungsbügel 15 an seinem freien Ende einen hakenförmigen Eingriffs-Endbereich 33 auf, der U-förmig gebogen ist. In der Drehsicherungsstellung des Sicherungsbügels 15, die in den Figuren 1 bis 8 gezeigt ist, ist der U-förmige Eingriffs-Endbereich 33 nach unten offen, so dass er von oben her auf den ersten Kurbelarmabschnitt 9 aufgesetzt werden kann.

Wie aus Figur 4 ersichtlich, können die beiden Schenkel des U-förmigen Eingriffs-Endbereichs 33 geringfügig aufeinanderzulaufen und am Beginn des Einführbereichs voneinander einen Abstand haben, der geringfügig kleiner als der Durchmesser des ersten Kurbelarmabschnitts 9 ist. Hierdurch kann der Eingriffs-Endbereich 33 verrastend bzw. klippartig auf den Sicherungsbügel 15 aufgesetzt werden, wodurch er gegen ein ungewolltes Abheben vom Kurbelarm 8 gesichert ist.

Wie aus Figur 7 ersichtlich, ist der zweite Bügelabschnitt 32 weiterhin derart gebogen, dass sich der U-förmige Eingriffs-Endbereich 33 im Bereich einer Vertikalebene 34 der Halteschelle 16 und damit des Außenrohrs 3 befindet. Zweckmäßigerweise wird die Halteschelle 16 derart am Außenrohr 3 befestigt, dass die Vertikalebene 34 parallel zur Längsrichtung des Fahrzeuganhängers verläuft. Die Schwenkachse 35 des Sicherungsbügels 15 verläuft dagegen in einer Vertikalebene, die senkrecht zur Vertikalebene 34 verläuft. Aufgrund dieser Anordnung kann der U-förmige Eingriffs-Endbereich 33 des Sicherungsbügels 15 in der Vertikalebene 34 über das obere Ende des Außenrohrs 3 um mehr als 180° in eine Freigabestellung 36 zurückgeschwenkt werden, die in den Figuren 2 und 3 gestrichelt dargestellt ist. Die Vertikalebene 34 stellt damit für den U-förmigen Eingriffs-Endbereich 33 eine Schwenkebene dar, die senkrecht zur Grundebene 23 (Figur 6) der Halteschelle 16 angeordnet ist. In der Freigabestellung 36 befindet sich der Sicherungsbügel 15 vollkommen außerhalb des Schwenkbereichs der Handkurbel 4, so dass sich diese frei drehen lässt.

Wie aus den Figuren 2 und 3 weiterhin ersichtlich, liegt der Eingriffs-Endbereich 33 des Sicherungsbügels 15 in der Freigabestellung 36 am Außenrohr 3 an und wird durch die Schwerkraft in dieser Position gehalten. Weiterhin ist ersichtlich, dass dadurch, dass der erste Bügelabschnitt 31 kürzer als der zweite Bügelabschnitt 32 ist und zweckmäßigerweise nur geringfügig länger als der Außenradius der Halteschelle 16 ist, auch die übrigen Bereiche des Sicherungsbügels 15 nicht weit über das Außenrohr 3 vorstehen, wenn sich der Sicherungsbügel 15 in der Freigabestellung 36 befindet (siehe Figur 3).

## Patentansprüche

1. Handkurbel-Drehsicherungseinrichtung für Stützräder (1) von Fahrzeuganhängern, **gekennzeichnet durch**
- einen Sicherungsbügel (15), der ausgebildet ist, mittels einer Schwenkbewegung in und außer Sicherungseingriff mit einer Handkurbel (4) des Stützrads (1) gebracht zu werden, und
- eine Schellenhalterung (14) zur schwenkbaren Lagerung des Sicherungsbügels (15), wobei die Schellenhalterung (14) eine Halteschelle (16), die zum Umschließen eines Außenrohrs (3) des Stützrads (1) ausgebildet ist, und eine an der Halteschelle (16) befestigte Schwenklagereinrichtung zur schwenkbaren Lagerung des Sicherungsbügels (15) aufweist.

2. Handkurbel-Drehsicherungseinrichtung nach Anspruch 1, **dadurch gekennzeichnet, dass** der Sicherungsbügel (15) aus einem einarmigen Bügel besteht, der einseitig an der Schellenhalterung (14) schwenkbar gelagert ist.

3. Handkurbel-Drehsicherungseinrichtung nach Anspruch 1 oder 2, **dadurch gekennzeichnet, dass** der Sicherungsbügel (15) einen ersten, lagernahen Bügelabschnitt (31), dessen Länge 20% bis 50% der Bügelgesamtlänge beträgt, und einen zweiten Bügelabschnitt (32) aufweist, dessen Länge 50% bis 80% der Bügelgesamtlänge beträgt und der in einem Winkel von 70° bis 110° relativ zum ersten Bügelabschnitt (31) verläuft.

4. Handkurbel-Drehsicherungseinrichtung nach einem der vorhergehenden Ansprüche, **dadurch gekennzeichnet, dass** der Sicherungsbügel (15) einen hakenförmigen Eingriffs-Endbereich (33) aufweist, der in einer Schwenkebene, die senkrecht zur Grundebene (23) der Halteschelle (16) angeordnet ist, relativ zur Halteschelle (16) schwenkbar ist.

5. Handkurbel-Drehsicherungseinrichtung nach einem der vorhergehenden Ansprüche, **dadurch gekennzeichnet, dass** der Sicherungsbügel (15) aus einem einstückigen, gebogenen Drahtbügel besteht.

6. Handkurbel-Drehsicherungseinrichtung nach einem der vorhergehenden Ansprüche, **dadurch gekennzeichnet, dass** die Schwenklagereinrichtung der Schellenhalterung (14) ein an der Halteschelle (16) befestigtes und von der Halteschelle (16) seitlich nach außen vorstehendes hülsen- oder bolzenförmiges Lagerelement (22) umfasst, an dem ein Lagerabschnitt (29) des Sicherungsbügels (15) drehbar gelagert ist.

7. Handkurbel-Drehsicherungseinrichtung nach Anspruch 6, **dadurch gekennzeichnet, dass** das Lagerelement (22) aus einer Lagerhülse (24) mit Innengewinde besteht, in die eine Schraube (25) mit einem als Seitenbegrenzungselement dienenden Schraubenkopf (26) eingeschraubt ist, dessen Durchmesser größer als der Außendurchmesser der Lagerhülse (24) ist.

8. Handkurbel-Drehsicherungseinrichtung nach einem der vorhergehenden Ansprüche, **dadurch gekennzeichnet, dass** die Halteschelle (16) ein Metallband (18) umfasst, das auf seiner Innenseite mit einem Mantel (19) aus Gummi oder Kunststoff ausgekleidet ist.

9. Kurbelbetätigtes Stützrad für Fahrzeuganhänger mit
- einem Außenrohr (3),
- einem ausfahrbaren Stützenteil, das im Außenrohr (3) längsverschiebbar gelagert ist,
- einem Rad (7), das mittels einer Halteeinrichtung (6) an einem Ende des ausfahrbaren Stützenteils gehaltert ist,
- eine Handkurbel (4) zur Betätigung des ausfahrbaren Stützenteils,
**gekennzeichnet durch** eine Handkurbel-Drehsicherungseinrichtung gemäß einem der vorhergehenden Ansprüche.

10. Kurbelbetätigtes Stützrad nach Anspruch 9, **dadurch gekennzeichnet, dass** der Sicherungsbügel (15) zwischen einer Drehsicherungsstellung, in welcher er mit der Handkurbel (4) in Eingriff ist, und einer Freigabestellung (36) schwenkbar ist, in welcher er sich außerhalb des Drehbereichs der Handkurbel (4) befindet.

11. Kurbelbetätigtes Stützrad nach Anspruch 9 oder 10, **dadurch gekennzeichnet, dass** der Eingriffs-Endbereich (33) des Sicherungsbügels (15) derart U-förmig ausgebildet ist, dass er beim Überführen in die Drehsicherungsstellung von oben her auf die Handkurbel (4) aufsetzbar ist.

12. Kurbelbetätigtes Stützrad nach einem der Ansprüche 9 bis 11, **dadurch gekennzeichnet, dass** die Handkurbel-Drehsicherungseinrichtung derart am Außenrohr (3) des Stützrads (1) befestigt und ausgebildet ist, dass der Eingriffs-Endbereich (33) des Sicherungsbügels (15) über das obere Ende des Außenrohrs (3) schwenkbar ist.

13. Kurbelbetätigtes Stützrad nach einem der Ansprüche 9 bis 12, **dadurch gekennzeichnet, dass** die Schwenkachse (35) der Handkurbel-Drehsicherungseinrichtung senkrecht zur Längsachse (5) des Stützrads verläuft.

## Claims

1. Hand crank rotation prevention device for support wheels (1) of vehicle trailers, **characterised by**
- a securing bracket (15) which is designed so as to be brought into and out of secure engagement with a hand crank (4) of the support wheel (1) by means of a pivot movement, and
- a clamp mount (14) for pivotably mounting the securing bracket (15), the clamp mount (14) comprising a holding clamp (16) for surrounding an outer tube (3) of the support wheel (1), and a pivot bearing device for pivotably mounting the securing bracket (15), which device is attached to the holding clamp (16).

2. Hand crank rotation prevention device according to claim 1, **characterised in that** the securing bracket (15) consists of a one-arm bracket which is pivotably mounted on one side of the clamp mount (14).

3. Hand crank rotation prevention device according to either claim 1 or claim 2, **characterised in that** the securing bracket (15) comprises a first bracket portion (31) near to the bearing, the length of which portion is 20% to 50% of the total length of the bracket, and a second bracket portion (32), the length of which is 50% to 80% of the total length of the bracket and which extends at an angle of 70° to 110° relative to the first bracket portion (31).

4. Hand crank rotation prevention device according to any of the preceding claims, **characterised in that** the securing bracket (15) comprises a hooked engagement end region (33), which is pivotable relative to the holding clamp (16) in a pivot plane that is arranged perpendicularly to the ground plane (23) of the holding clamp (16).

5. Hand crank rotation prevention device according to any of the preceding claims, **characterised in that** the securing bracket (15) consists of an integral bent wire bracket.

6. Hand crank rotation prevention device according to any of the preceding claims, **characterised in that** the pivot bearing device of the clamp mount (14) comprises a sleeve-shaped or bolt-shaped bearing element (22) which is attached to the holding clamp (16) and projects laterally outwards from the holding clamp (16), on which bearing element a bearing portion (29) of the securing bracket (15) is rotatably mounted.

7. Hand crank rotation prevention device according to claim 6, **characterised in that** the bearing element (22) consists of a bearing sleeve (24) having an internal thread, into which a screw (25) having a screw head (26) used as a lateral boundary element is screwed, the diameter of which screw is greater than the external diameter of the bearing sleeve (24).

8. Hand crank rotation prevention device according to any of the preceding claims, **characterised in that** the holding clamp (16) comprises a metal strip (18) which is lined on the inside thereof with a lining (19) made of rubber or plastics material.

9. Crank operated support wheel for vehicle trailers comprising
- an outer tube (3),
- an extendable support part that is mounted in the outer tube (3) such that it can be moved longitudinally,
- a wheel (7) that is held at one end of the extendable support part by means of a holding device (6),
- a hand crank (4) for operating the extendable support part,
**characterised by** a hand crank rotation prevention device according to any of the preceding claims.

10. Crank operated support wheel according to claim 9, **characterised in that** the securing bracket (15) can be pivoted between a rotation prevention position, in which it is engaged with the hand crank (4), and a release position (36), in which it is located outside the range of rotation of the hand crank (4).

11. Crank operated support wheel according to either claim 9 or claim 10, **characterised in that** the engagement end region (33) of the securing bracket (15) is U-shaped such that it can be placed onto the hand crank (4) from above when moved into the rotation prevention position.

12. Crank operated support wheel according to any of claims 9 to 11, **characterised in that** the hand crank rotation prevention device is attached to the outer tube (3) of the support wheel (1) and designed such that the engagement end region (33) of the securing bracket (15) can be pivoted over the upper end of the outer tube (3).

13. Crank operated support wheel according to any of claims 9 to 12, **characterised in that** the pivot axis (35) of the hand crank rotation prevention device extends perpendicularly to the longitudinal axis (5) of the support wheel.

## Revendications

1. Dispositif de blocage en rotation de manivelle pour des roues de support (1) de remorques de véhicule, **caractérisé par**
- un arceau de blocage (15) qui est réalisé pour être amené en engagement et dégagement de blocage avec une manivelle (4) de la roue de support (1) par un mouvement de basculement, et
- une monture à collier (14) pour le montage mobile en basculement de l'arceau de blocage (15), la monture à collier (14) comprenant un collier de maintien (16) réalisé pour enserrer un tube extérieur (3) de la roue de support (1), et un moyen formant palier de basculement fixé sur le collier de maintien (16) et destiné au montage en basculement de l'arceau de blocage (15).

2. Dispositif de blocage en rotation de manivelle selon la revendication 1, **caractérisé en ce que** l'arceau de blocage (15) est constitué d'un arceau à un seul bras qui est monté mobile en basculement sur un côté sur la monture à collier (14).

3. Dispositif de blocage en rotation de manivelle selon la revendication 1 ou 2, **caractérisé en ce que** l'arceau de blocage (15) comprend une première portion d'arceau (31) à proximité du palier dont la longueur est de 20 % à 50 % de la longueur totale de l'arceau, et une seconde portion d'arceau (32) dont la longueur est de 50 % à 80 % de la longueur totale de l'arceau, et qui s'étend sous un angle de 70° à 110° par rapport à la première portion d'arceau (31).

4. Dispositif de blocage en rotation de manivelle selon l'une des revendications précédentes, **caractérisé en ce que** l'arceau de blocage (15) comprend une zone d'engagement terminale (33) en forme de crochet qui est mobile en basculement par rapport au collier de maintien (16) dans un plan de basculement qui est agencé perpendiculairement au plan de base (23) du collier de maintien (16).

5. Dispositif de blocage en rotation de manivelle selon l'une des revendications précédentes, **caractérisé en ce que** l'arceau de blocage (15) est constitué par un arceau en fil cintré monobloc.

6. Dispositif de blocage en rotation de manivelle selon l'une des revendications précédentes, **caractérisé en ce que** le moyen formant palier de basculement de la monture à collier (14) comprend un élément de palier (22) en forme de douille ou de goujon fixé sur le collier de maintien (16) et dépassant latéralement vers l'extérieur à partir du collier de maintien (16), sur lequel est montée en rotation une portion de montage (29) de l'arceau de blocage (15).

7. Dispositif de blocage en rotation de manivelle selon la revendication 6, **caractérisé en ce que** l'élément de palier (22) est constitué par une douille de palier (24) taraudée dans laquelle est vissée une vis (25) avant une tête de vis (26) servant d'élément de délimitation latérale, tête dont le diamètre est supérieur au diamètre extérieur de la douille de palier (24).

8. Dispositif de blocage en rotation de manivelle selon l'une des revendications précédentes, **caractérisé en ce que** le collier de maintien (16) comprend une bande métallique (18) qui est habillée d'une enveloppe (19) en caoutchouc ou en matière plastique sur son côté intérieur.

9. Roue de support actionnée par manivelle pour des remorques de véhicules, comportant
- un tube extérieur (3),
- une partie de soutien déployable qui est montée mobile en translation longitudinale dans le tube extérieur (3),
- une roue (7) qui est retenue à une extrémité de la partie de soutien déployable à l'aide d'un moyen de retenue (6),
- une manivelle (4) pour actionner la partie de soutien déployable,
**caractérisée par** un dispositif de blocage en rotation de manivelle selon l'une des revendications précédentes.

10. Roue de support actionnée par manivelle selon la revendication 9, **caractérisée en ce que** l'arceau de blocage (15) est mobile en basculement entre une position de blocage en rotation dans laquelle il est en engagement avec la manivelle (4), et une position de dégagement (36) dans laquelle il est à l'extérieur de la zone de rotation de la manivelle (4).

11. Roue de support actionnée par manivelle selon la revendication 9 ou 10, **caractérisée en ce que** la zone d'engagement terminale (33) de l'arceau de blocage (15) est réalisée en forme de U de telle sorte que lors du transfert jusque dans la position de blocage en rotation, elle peut être posée depuis le haut sur la manivelle (4).

12. Roue de support actionnée par manivelle selon l'une des revendications 9 à 11, **caractérisée en ce que** le dispositif de blocage en rotation de manivelle est fixé sur le tube extérieur (3) de la roue de support (1) et réalisé de telle sorte que la zone d'engagement terminale (33) de l'arceau de blocage (15) est mobile en basculement via l'extrémité supérieure du tube extérieur (3).

13. Roue de support actionnée par manivelle selon l'une des revendications 9 à 12, **caractérisée en ce que** l'axe de basculement (35) du dispositif de blocage en rotation de manivelle s'étend perpendiculairement à l'axe longitudinal (5) de la roue de support.
